# EUROPÄISCHE PATENTSCHRIFT

(11) **EP 2 656 554 B1**
(45) Veröffentlichungstag und Bekanntmachung des Hinweises auf die Patenterteilung: **20.04.2016**
(21) Anmeldenummer: 11802381.1
(22) Anmeldetag: 19.12.2011
(51) Int. Cl.: H04L 12/40

(54) **KOMMUNIKATIONSSYSTEM, VERFAHREN ZUM BETRIEB EINES SOLCHEN SOWIE KOMMUNIKATIONSMODUL**
COMMUNICATION SYSTEM, METHOD FOR OPERATING SUCH A COMMUNICATION SYSTEM, AND COMMUNICATION MODULE
SYSTÈME DE COMMUNICATION, PROCÉDÉ POUR FAIRE FONCTIONNER UN TEL SYSTÈME AINSI QUE MODULE DE COMMUNICATION

(30) Priorität: 20.12.2010 DE 102010061352
(43) Veröffentlichungstag der Anmeldung: 30.10.2013
(73) Patentinhaber: Schneider Electric Automation GmbH, 63500 Seligenstadt (DE)
(72) Erfinder: HORTIG, Michael, 63263 Neu-Isenburg (DE); KÄMMERER, Ulrich, 63263 Neu-Isenburg (DE)
(74) Vertreter: Stoffregen, Hans-Herbert
(86) Internationale Anmeldenummer: PCT/EP2011/073302
(87) Internationale Veröffentlichungsnummer: WO 2012/084872

(56) Entgegenhaltungen:
- DE-A1- 19 710 137
- US-A- 5 392 285
- US-A1- 2005 013 310
- US-A1- 2005 147 082

## Beschreibung

Die Erfindung bezieht sich auf ein Kommunikationssystem nach dem Oberbegriff des Anspruchs 1, auf ein Verfahren zur Steuerung und Überwachung einer Kommunikation zwischen einem Master-Gerät und Slave-Geräten über einen Kommunikationsbus nach dem Oberbegriff des Anspruch 7 sowie auf ein Kommunikationsmodul nach dem Oberbegriff des Anspruchs 13.

Die US 2005/0013310 A1 offenbart ein Kommunikationssystem, umfassend einen Kommunikationsbus, ein mit dem Kommunikationsbus verbundenes Master-Gerät, welches mit dem Kommunikationsbus in einem Master-Modus kommuniziert und mehrere mit dem Kommunikationsbus verbindbare Slave-Geräte, die mit dem Kommunikationsbus in einem Slave-Modus kommunizieren. Die Slave-Geräte sind über ein als Proxy ausgebildetes Kommunikationsmodul mit dem Kommunikationsbus verbindbar, wobei das Kommunikationsmodul über einen Eingangs-Port mit dem Kommunikationsbus verbunden ist und Ausgangs-Ports zum Anschluss der Slave-Geräte mittels Punkt-zu-Punkt-Verbindung aufweist. Das Kommunikationsmodul weist einen Kommunikationsprozessor auf, wobei der Kommunikationsprozessor eine Zuordnungstabelle mit Daten betreffend die Zuordnung von Ziel-Adressen zu Ausgangs-Ports oder Slave-Geräte-Adressen aufweist, so dass eingehende Nachrichten-Frames hinsichtlich ihrer Zieladresse analysierbar und unter Berücksichtigung der Daten der Zuordnungstabelle an einen der Ausgangsports weiterleitbar sind.

Ein Kommunikationssystem der eingangs genannten Art ist aus der DE-A-10 2009 049 378 bekannt. Diese bezieht sich auf eine busfähige Anschlusseinheit zum Anschluss und zur Steuerung mindestens eines Betriebsgerätes in einer busorientierten programmierbaren Elektroinstallation mit einer Kontrolleinheit, mit wenigstens einer Steuerungseinheit zum Steuern des wenigstens einen an die Anschlusseinheit angeschlossenen Betriebsgerätes, mit einem Steuerbus zum Verbinden der wenigstens einen Steuerungseinheit mit der Kontrolleinheit, wobei die Kontrolleinheit eine Busanschlusseinrichtung zum Anschluss der Anschlusseinheit an eine Busleitung der Elektroinstallation umfasst. Bei diesem System ist der Steuerbus zur Übermittlung von Energie und Daten zwischen der Kontrolleinheit und der wenigstens einen Steuerungseinheit eingerichtet, wobei die Kontrolleinheit eine Energieversorgungseinheit zur Energieversorgung der Kontrolleinheit und der mindestens einen Steuerungseinheit umfasst, und der Steuerbus zum parallelen Anschließen mehrerer Steuerungseinheiten eingerichtet ist.

Ein weiteres Kommunikationssystem sowie ein weiteres Verfahren zum Betrieb eines solchen ist aus der DE-B-198 08 230 bekannt. Das Kommunikationssystem umfasst einen Kommunikationsbus, mehrere mit dem Bus verbundene elektrische Vorrichtungen, die mit dem Bus in einem Slave-Mode kommunizieren sowie einen PC als Haupt bzw. Master-Prozessor, der mit dem Bus verbunden ist und in einem Master-Mode arbeitet. Ferner umfasst das System einen ersten Monitor-Prozessor, der mit dem Bus verbunden ist und mit dem Bus in einem Slave-Mode kommuniziert, wenn der Master-Prozessor in Betrieb ist, wobei der erste Monitor-Prozessor mit dem Bus in einem Master-Mode kommuniziert, wenn der Master-Prozessor nicht in Betrieb ist.

Das Kommunikationssystem soll auch dann mit elektrischen Elementen oder Slaves, die mit dem Kommunikationsbus verbunden sind, kommunizieren, wenn der PC oder Master nicht zu einer Übertragung fähig ist.

Bei dem bekannten Kommunikationssystem sind das Master-Gerät sowie die Slave-Geräte über einen RS-485-Port unmittelbar mit dem seriellen Kommunikationsbus verbunden.

Ein serieller Kommunikationsbus wird im System verwendet, um Informationen zwischen Automatisierungsgeräten auszutauschen. Dabei ist eine Vielzahl von Protokollen anwendbar, wobei zumeist das Master-Slave-Prinzip im Halb-Duplex-Mode angewendet wird.

Bevor ein solches Netzwerk betriebsbereit ist, müssen Kommunikationseinstellungen, wie beispielsweise Geschwindigkeit, Parität-Bits, Anzahl von Stop-Bits, für jedes Gerät entsprechend den für das System definierten Werten eingestellt werden. Ferner muss jedem Gerät eine eindeutige Adresse zugeordnet werden, bevor dieses in dem Netzwerk betrieben werden kann. Erst dann ist eine weitere Konfiguration über das Netzwerk möglich.

Um die Konfiguration durchzuführen, benötigen die meisten Geräte eine entsprechende PC-Applikation. Da die Geräte vor Durchführung einer geeigneten Kommunikations-Konfiguration in dem Netzwerk nicht betriebsbereit sind, müssen diese einmalig in einer Punkt-zu-Punkt-Verbindung direkt mit dem PC verbunden werden.

Bei der Auswahl von Kommunikationseinstellungen, die in dem Kommunikationssystem genutzt werden sollen, müssen die Kommunikationseigenschaften von sämtlichen Geräten, die möglicherweise mit dem Netzwerk verbunden werden, berücksichtigt werden. Die maximal mögliche Geschwindigkeit innerhalb des Netzwerks resultiert aus dem kleinsten gemeinsamen Nenner und ist somit durch das "schwächste" Gerät vorgegeben.

Andere Kommunikationseinstellungen wie z. B. Parität-Bits oder Anzahl von Stop-Bits müssen ebenfalls bei jedem Gerät gleich sein. Ohne Festlegung einer gemeinsamen Basis hinsichtlich der Geschwindigkeit und der anderen Kommunikationsparameter sind die Geräte nicht kompatibel und können somit nicht in demselben Netzwerk betrieben werden.

Im Betrieb des Kommunikationssystems sendet das Master-Gerät Anfragen (Requests) in Form von Nachrichten-Frames an die Slave-Geräte und empfängt Antworten (Responses), die von den Slave-Geräten zurückgesendet werden. Jeder durch ein Slave-Gerät empfangener Nachrichten-Frame muss in dem jeweiligen Slave-Gerät hinsichtlich seiner Adresse und Prüfsumme (CRC, Cyclic Redundancy Check) ausgewertet werden, um zu erkennen, ob der Nachrichten-Frame für das jeweilige Slave-Gerät bestimmt ist oder nicht. Um jeden empfangenen Nachrichten-Frame zu verarbeiten, muss das Slave-Gerät entsprechende Rechenleistungen aufbringen. Während dieser Zeit müssen andere System-Tasks unterbrochen werden.

Wenn das Master-Gerät einen Request sendet, wartet dieses für eine vorbestimmte Zeitspanne (Timeout), in der eine Antwort (Response) durch das Slave-Gerät erwartungsgemäß zurückgesendet wird. Diese Zeitspanne (Timeout) kann in dem Master-Gerät konfiguriert werden. Der Timeout-Wert muss entsprechend dem Slave-Gerät eingestellt werden, welches die höchste Zeit zum Antworten benötigt. Dies ist typischerweise ein Vielfaches von der Zeit, die für eine reguläre Transaktion benötigt wird, wobei beispielsweise bei einer regulären Transaktion von etwa 50 ms ein Timeout-Wert von üblicherweise 1000 ms eingestellt wird.

Konsequenterweise hat die Abwesenheit eines Slave-Gerätes, beispielsweise durch Abklemmen des Slave-Gerätes oder durch eine unterbrochene Leitung, massive Auswirkungen auf das gesamte Netzwerk-Zeitverhalten. Hiervon können zudem intakte Slave-Geräte, welche eine wiederkehrende Anfrage erwarten, insofern negativ beeinflusst werden, dass sie, wenn die wiederholende Anfrage aufgrund des Wartens auf den gestörten Teilnehmer nicht erfolgt, in einen sicheren Zustand ihrer Hauptfunktion fallen, und somit ihre eigentliche Funktion nicht mehr erfüllen.

Aus Obigem ergibt sich, dass die Slave-Geräte zunächst in einem Punkt-zu-Punkt-Mode mit einem PC konfiguriert werden müssen, bevor diese in ein Netzwerk integriert und über dieses angesprochen werden können.

In großen verteilten Systemen ist es sehr zeitaufwendig, die Slave-Geräte aufzusuchen, um diese zu konfigurieren. Dies ist ineffizient sowohl beim Aufbau des Kommunikationssystems als auch beim Austausch eines defekten Gerätes.

Ein weiterer Nachteil ist, dass eine gemeinsame Kommunikations-Basis von allen Geräten, die möglicherweise mit dem Kommunikationssystem verbunden werden, unterstützt werden muss. Existiert eine solche gemeinsame Basis hinsichtlich Geschwindigkeit, Parität-Bits, Anzahl von Stop-Bits usw. nicht, können die Geräte in demselben Netzwerk nicht betrieben werden. Darüber hinaus ist die Netzwerk-Performance durch das "schwächste" Gerät begrenzt.

Unabhängig davon beeinflussen abwesende bzw. defekte Geräte massiv das Netzwerk-Timing. Intakte Geräte können ebenfalls negativ beeinflusst werden.

Davon ausgehend liegt der vorliegenden Erfindung die Aufgabe zu Grunde, ein Kommunikationssystem sowie ein Verfahren zum Betrieb eines solchen gemäß der eingangs beschriebenen Art derart weiterzubilden, dass die Leistungsfähigkeit des Kommunikationssystems verbessert wird. Ferner soll ein Kommunikationsmodul zur Durchführung des Verfahrens vorgeschlagen werden.

Die Aufgabe wird u. a. erfindungsgemäß durch die Merkmale des Anspruch 1 gelöst.

Um parallel zu der regulären Kommunikation eine Überprüfung gestörter Ausgangs-Ports bzw. Slave-Geräte durchführen zu können, ist vorgesehen, dass der Kommunikationsprozessor über eine zweite serielle Schnittstelle mit einem zweiten internen Bus verbunden ist, wobei die Ausgangs-Ports jeweils über einen zweiten schaltbaren Transceiver mit dem zweiten internen Bus verbunden sind, wobei Slave-Geräte bzw. Ausgangs-Ports, welche eine Rückantwort auf eine Anfrage des Kommunikationsprozessors über den ersten Bus nicht zurücksenden mittels des Kommunikationsprozessors über den zweiten Bus parallel zu der regulären Kommunikation über den ersten internen Bus zyklisch abfragbar sind.

Der Kommunikationsprozessor ist über eine dritte serielle Schnittstelle und einen dritten Transceiver mit dem Kommunikationsbus verbunden, wobei der Kommunikationsbus vorzugsweise ein RS-485-Format aufweist.

In bevorzugter Ausführungsform ist die Punkt-zu-Punkt-Verbindung zwischen Slave-Gerät und Ausgangs-Port des Kommunikationsmoduls ebenfalls in einem RS-485-Format ausgebildet.

Zur Steuerung der Kommunikation über die internen Busse zu den einzelnen Ausgangs-Ports sind die ersten und zweiten Transceiver steuerbar ausgebildet. Vorzugsweise sind die ersten und zweiten Transceiver über jeweils eine Leitung mit jeweils einem Ausgang des Kommunikationsprozessors verbunden.

Die Aufgabe wird erfindungsgemäß durch ein Verfahren mit den Merkmalen des Anspruchs 7 gelöst.

Um einen optimalen Timeout-Wert zu berechnen, ist vorzugsweise vorgesehen, dass der Kommunikationsprozessor die laufende Kommunikation für jeden Ausgangs-Port durch Erfassen einer typischen Reaktionszeit des Slave-Gerätes überwacht.

Parallel zu der regulären Kommunikation ist gemäß einem bevorzugten Verfahrensschritt vorgesehen, dass die an dem Kommunikationsprozessor angeschlossenen Slave-Geräte zyklisch auf Funktion abgefragt werden, wobei dann, wenn innerhalb einer vorbestimmten Reaktionszeit ("Timeout") eine Rückantwort nicht empfangen wird, ein internes "Health-Flag" für den entsprechenden Ausgangs-Port in der Zuordnungstabelle zurückgesetzt wird und wobei der Kommunikationsprozessor auf jede Anfrage an das gestörte Slave-Geräte selbst an das Master-Gerät antwortet und dass der Kommunikationsprozessor über einen zweiten internen Bus gleichzeitig kontinuierlich versucht, eine Antwort von dem gestörten Slave-Gerät zu erhalten, indem der Kommunikationsprozessor selbst Nachrichten zu dem Slave-Gerät sendet.

Gemäß einer weiteren bevorzugten Verfahrensweise ist vorgesehen, dass bei Durchführung der regulären Kommunikation über den ersten internen Bus eine Prüfung des "Health-Flag" erfolgt, wobei dann, wenn das "Health-Flag" den logischen Zustand "0" aufweist, der Kommunikationsprozessor eine "Exception-Nachricht" als Antwort an das Master-Gerät sendet und dann, wenn das "Health-Flag" den logischen Zustand "1" aufweist, den Transceiver für die ungestörte Kommunikation des Ziel-Ausgangs-Ports freigibt.

Des Weiteren wird die Aufgabe durch ein Kommunikationsmodul mit den Merkmalen des Anspruchs 13 gelöst.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von den den Figuren zu entnehmenden bevorzugten Ausführungsbeispielen.

Es zeigen:
- Fig. 1: eine schematische Darstellung des Kommunikationssystems mit Master-Gerät, Kommunikationsbus, Kommunikationsmodul und mit diesem verbundene Slave-Geräte,
- Fig. 2: eine interne logische Architektur eines in dem Kommunikationsmodul enthaltenen Kommunikationsprozessors,
- Fig. 3: eine Ziel-Zuordnungs-Tabelle,
- Fig. 4: ein schematisches Ablaufdiagramm bei ungestörter Kommunikation und
- Fig. 5: ein schematisches Ablaufdiagramm bei gestörter Kommunikation aufgrund eines defekten Slave-Gerätes.

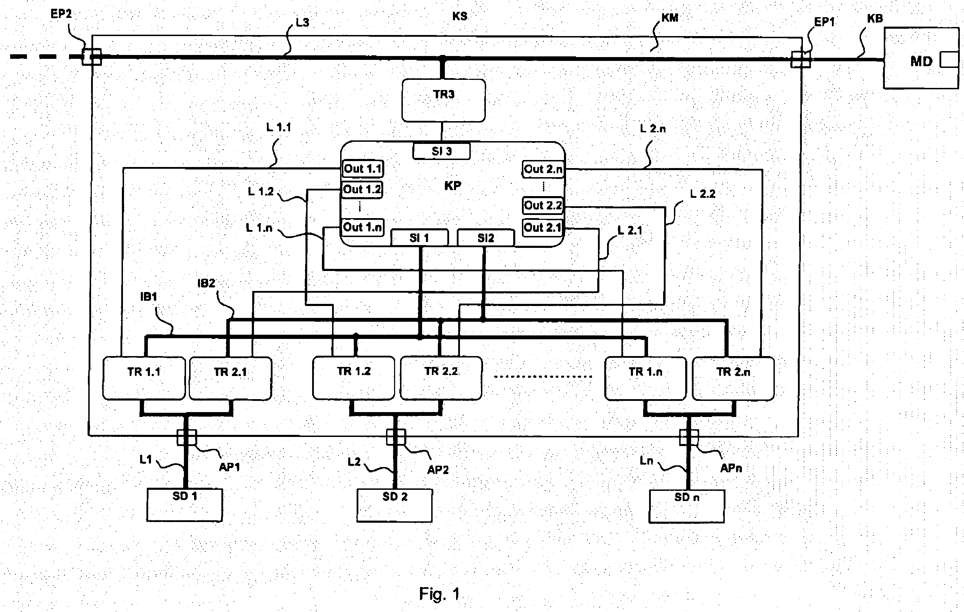

Fig.1 zeigt eine schematische Darstellung eines Kommunikationssystems KS, umfassend eine Vielzahl von Slave-Devices SD1, SD2... SDn, wie Sensoren, Motorsteuerungen, Messgeräte, die über ein Kommunikationsmodul KM und einen Kommunikationsbus KB, wie serieller Bus in RS-485-Format, mit einem Master-Device MD wie Automatisierungsgerät verbunden sind.

Die Slave-Devices SD1, SD2...SDn sind jeweils über eine Leitung L1, L2...Ln in Form einer RS-485-Punkt-zu-Punkt-Verbindung mit jeweils einem Ausgangs-Port AP1, AP2...APn des Kommunikationsmoduls KM verbunden. Die Ausgangs-Ports AP1, AP2...APn sind über jeweils einen ersten Transceiver TR1.1, TR1.2...TR1.n mit einem ersten internen Bus IB1 verbunden, der an einer ersten seriellen Schnittstelle SI1 eines Kommunikationsprozessors KP verbunden ist. Ferner ist jeder der Ausgangs-Ports AP1, AP2...APn über einen zweiten Transceiver TR2.1, TR2.2...TR2.n mit einem zweiten internen Bus IB2 verbunden, der an einer zweiten seriellen Schnittstelle SI2 des Kommunikationsprozessors KP angeschlossen ist.

Die ersten Transceiver TR1.1, TR1.2...TR1.n sind jeweils über eine Leitung L1.1, L1.2...L1.n mit Ausgängen Out1.1, Out1.2...Out1.n des Kommunikationsprozessors verbunden, so dass die Transceiver zwischen einem leitenden (aktiven) und einem nicht leitenden (nicht aktiven) Zustand umschaltbar sind. Ferner sind die zweiten Transceiver TR2.1, TR2.2...TR2.n über Leitungen L2.1, L2.2...L2-n mit Ausgängen Out2.1, Out2.2...Out2.n verbunden, um die Transceiver zwischen einem leitenden und einem nicht leitenden Zustand umzuschalten.

Der Kommunikationsprozessor KP ist über eine serielle Schnittstelle SI3, einen Transceiver TR3 und eine Leitung L3 mit Eingang-Ports EP1, EP2 verbunden, wobei der Eingangs-Port EP1 über den Kommunikationsbus KB mit dem Master-Device MD verbunden ist.

Das Kommunikationsmodul KM ist als intelligentes Infrastrukturelement mit Proxi-Funktionalität ausgebildet und wirkt als Verbindung zwischen dem Kommunikationsbus KB und den an den Ausgangs-Ports AP1, AP2...APn angeschlossenen Slave-Devices SD1, SD2...SDn.

Auf das Kommunikationsmodul KM kann zu Konfigurationszwecken über den Kommunikationsbus KB zugegriffen werden, wobei die Adresse des Kommunikationsmoduls KM und die auf dem Kommunikationsbus KB verwendeten Kommunikationseinstellungen konfiguriert werden müssen. Dies kann entweder über mechanische Schalter oder durch Speicherzugriff beispielsweise über Karteneinschübe oder USB-Interface ausgeführt werden. Ein vollständiges Konfigurationsmanagement durch die erwähnten Speichermedien ist ebenfalls denkbar.

Durch den Kommunikationsprozessor KP, die Transceiver TR1.1, TR1.2...TR1.n und TR2.1, TR2.2...TR2.n sowie eine RS485- zu RS485-Gateway (Proxy)-Struktur zu jedem der Ausgangs-Ports AP1, AP2...APn erfolgt eine vollständige physikalische Trennung des Kommunikationsbusses KB von den Ausgangs-Ports AP1, AP2...APn.

Der Kommunikationsprozessor KP steuert und überwacht den Kommunikationsfluss zu den Ausgangs-Ports AP1, AP2...APn.

Jeder von dem Kommunikationsprozessor KP über den Kommunikationsbus KB empfangene Nachrichten-Frame wird durch den Kommunikationsprozessor KP hinsichtlich seiner Ziel-Adresse analysiert und zu einem der Ausgangs-Ports AP1, AP2...APn weitergeleitet, dem diese Adresse zugeordnet ist. Die Adresszuordnung zu jedem der Ausgangs-Ports AP1, AP2...APn ist Teil der Konfiguration des Kommunikationsmoduls. Somit wird die Anforderung einer einheitlichen Adressierung der Slave-Geräte zu dem als Proxy ausgebildeten Kommunikationsmodul KM verschoben. Folglich kann jedem an einem Ausgangs-Port AP1, AP2...APn angeschlossenen Slave-Gerät jegliche Adresse zugeordnet werden, z. B. eine Standard (Default)- oder eine vordefinierte Adresse. Ferner ist die Mehrfachverwendung derselben Adresse für mehr als ein Gerät möglich.

Neben der Routing-Funktionalität des Kommunikationsprozessors KP adaptiert dieser auch die Kommunikationsparameter, die von den Slave-Geräten verwendet werden, die an den Ausgangs-Ports AP1, AP2...APn angeschlossen sind. Aufgrund dieser Fähigkeiten ist es möglich, jedes Slave-Gerät SD1, SD2...SDn mit unterschiedlichen Kommunikations-einstellungen zu betreiben. Somit ist ein "gemeinsamer Nenner" bei den Kommunikationseinstellungen in Bezug auf Geschwindigkeit, Parität-Bits und Anzahl der Stop-Bits nicht weiter notwendig. Die jeweils günstigsten Kommunikationseinstellungen für jeden Ausgangs-Port AP1, AP2...APn sind Teil der Konfiguration des Kommunikationsmoduls oder können durch automatische Adaption des Kommunikationsmoduls an die Slave-Geräte erfasst werden, sofern sie an den jeweiligen Ausgangs-Port angeschlossenen sind.

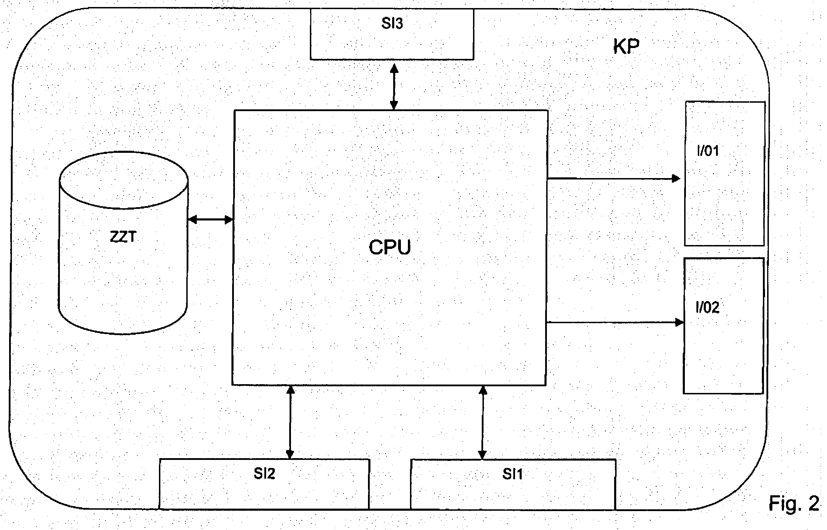

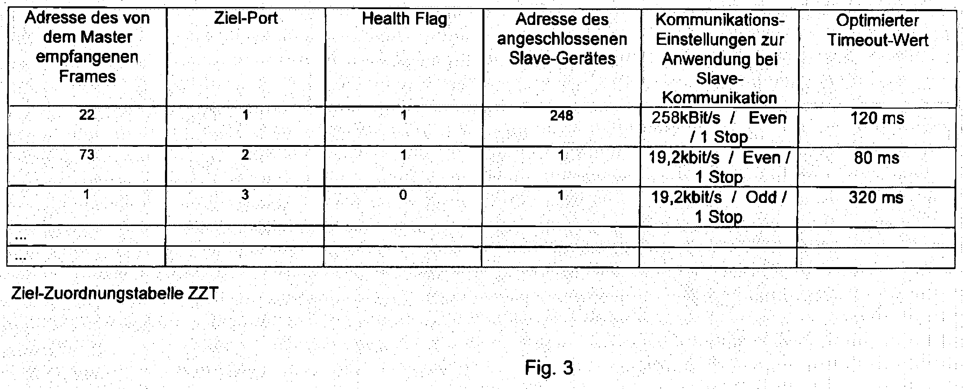

In einer Ziel-Zuordnungstabelle ZZT werden Informationen betreffend die Zuordnung von Ziel-Adressen zu Ziel-Ausgangsports AP1, AP2...APn, KommunikationsEinstellungen für jede Slave-Kommunikation sowie Adresse des verbundenen Slave-Gerätes gespeichert. Die Ziel-Zuordnungstabelle ZZT ist in einem internen oder externen Speicher des Kommunikationsprozessors KP abgelegt. Eine interne logische Struktur des Kommunikationsprozessors KP ist in Fig. 2 schematisch dargestellt. Inhalte der Ziel-Zuordnungstabelle ZZT sind in Fig. 3 beispielhaft dargestellt.

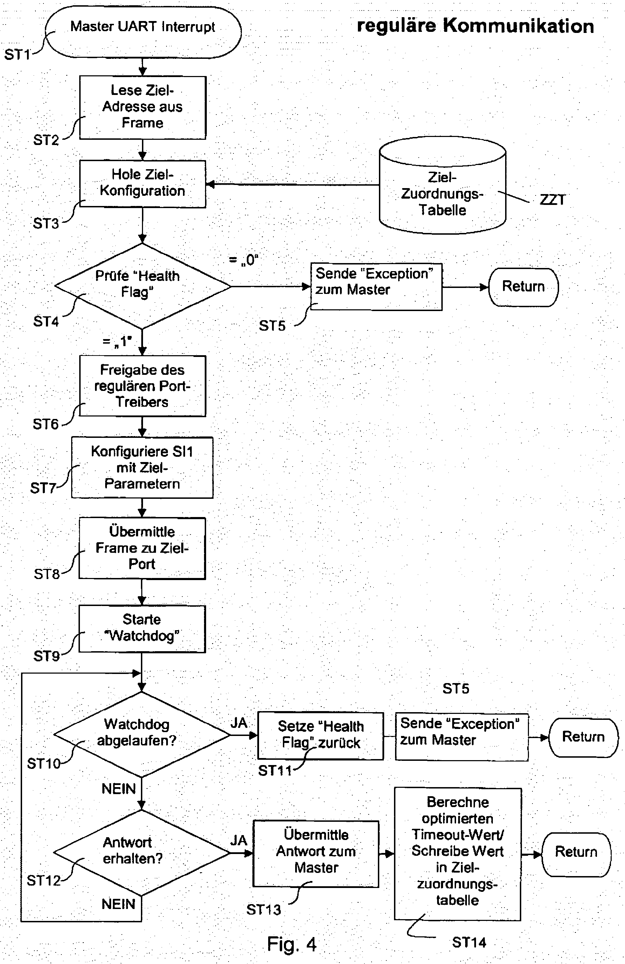

Ein Ablauf einer ungestörten Kommunikation soll anhand des in Fig. 4 dargestellten Ablaufdiagramms erläutert werden.

Nach einem "Master-UART-Interrupt" in Step ST1 liest der Kommunikationsprozessor KP in Step ST2 eine Zieladresse z. B. "22" aus einem empfangenen Nachrichten-Frame und holt in einem nächsten Step ST3 eine der Zieladresse ZZ zugeordnete ZielKonfiguration: Ziel-Ausgangs-Port = AP1; Health-Flag; Adresse des angeschlossenen Slave-Gerätes = 248; Kommunikations-Einstellungen = 258 kBit/s; Even; 1 Stop" aus der Zielzuordnungstabelle ZZT ab.

Anschließend wird in Step ST4 geprüft, ob sich der der empfangenen Ziel-Adresse zugeordnete Ziel-Port in einem gestörten oder ungestörten Zustand befindet. Hierzu ist in der Ziel-Zuordnungstabelle ZZT ein sogen. "Health-Flag" definiert, welches entweder den logischen Zustand "0" oder "1" aufweist. Sollte das "Health-Flag" den logischen Zustand "0" aufweisen, sendet der Kommunikationsprozessor KP in einem Step ST5 eine "Exception-Nachricht" zu dem Master-Gerät.

Steht das "Health-Flag" auf logisch "1", erfolgt in Step ST6 eine Freigabe eines der ersten Port-Treiber TR1.1, TR1.2...TR1.n für reguläre Kommunikation entsprechend der Ziel-Zuordnung und in Step ST7 die Konfiguration der ersten seriellen Schnittstelle ST1 mit den Zielparametern und das Nachrichten-Frame wird in Step ST8 an z. B. den Ziel-Ausgangs-Port AP1 übermittelt. Sodann wird in Step ST9 ein "Watchdog" gestartet, der in Step ST10 überwacht wird. Ist der "Watchdog" abgelaufen, wird in Step ST11 das "Health-Flag" zurückgesetzt, da der Ziel-Ausgangs-Port AP1 möglicherweise gestört ist, dann wird in Step ST5 eine "Exception-Nachricht" zu dem Master-Gerät gesendet.

Ist der "Watchdog" nicht überschritten, wird in Step ST12 überprüft, ob eine Antwort von dem Slave-Gerät SD1 erhalten wurde. Bejahendenfalls wird in Step ST13 die empfangene Antwort als Nachricht zu dem Master-Gerät MD übermittelt. Wenn eine Antwort nicht erhalten wurde, wird der "Watchdog" in Step ST10 weiter überwacht.

Um Multi-Master-Timeout-Ereignisse zu vermeiden, die durch dasselbe Problem, beispielsweise ein gestörtes Slave-Gerät, verursacht werden, und um die wirksame Timeout-Zeitdauer zu optimieren, überwacht der Kommunikationsprozessor KP die laufende Kommunikation für jeden Ausgangs-Port AP1, AP2 ...APn. Während der in Bezug zu Fig. 4 beschriebenen regulären Kommunikation wird die typische Antwortzeit des angeschlossenen Slave-Gerätes erfasst und verwendet, um einen optimierten Timeout-Wert z.B. den doppelten Wert der üblichen Antwortzeit, in dem Kommunikationsprozessor für jeden Ausgangs-Port zu berechnen (Step ST14). Dieser wird ebenfalls in der Zielzuordnungstabelle ZZT abgelegt.

Im Falle eines nicht antwortenden Slave-Gerätes (SD1, SD2...SDn) wartet der Kommunikationsprozessor KP nur für die optimierte Timeout-Zeit, sendet nach Ablauf des Timeout eine "Exception"-Nachricht an den Master und setzt das interne "Health-Flag" für den betroffenen Ausgangs-Port auf Fehler bzw. den logischen Wert "0".

Von diesem Zeitpunkt an antwortet der Kommunikationsprozessor auf jede Anfrage, die zur Weiterleitung an das Slave-Gerät bestimmt ist, welches an dem gestörten Ausgangsport angeschlossen ist, selbständig mit einer "Exception"-Antwort an das Master-Gerät (Step ST5).

Gleichzeitig wird kontinuierlich versucht, durch eigenständiges Senden von Nachrichten an das gestörte Slave-Gerät eine Antwort zu erhalten. Aufgrund der Struktur des Kommunikationsprozessors, insbesondere aufgrund der beiden internen Busse IB1, IB2, die jeweils mit einer seriellen Schnittstellen SI1 bzw. SI2 verbunden sind, erfolgt obige Kommunikation zur zyklischen Überprüfung von gestörten Slave-Geräten parallel zu der regulären Kommunikation mit den ungestörten Slave-Geräten, ohne dass dadurch Zeit verloren geht. Sobald das "gestörte" Slave-Gerät wieder erreichbar ist, beispielsweise durch Antwort auf eine Anfrage des Kommunikationsprozessors KP, wird das "Health-Flag" in der Zielzuordungstabelle ZZT wieder gesetzt und sämtliche Nachrichten, welche über den Kommunikationsbus KB durch den Kommunikationsprozessor KP für diesen Ausgangs-Port empfangen werden, zu dem Slave-Gerät weitergeleitet.

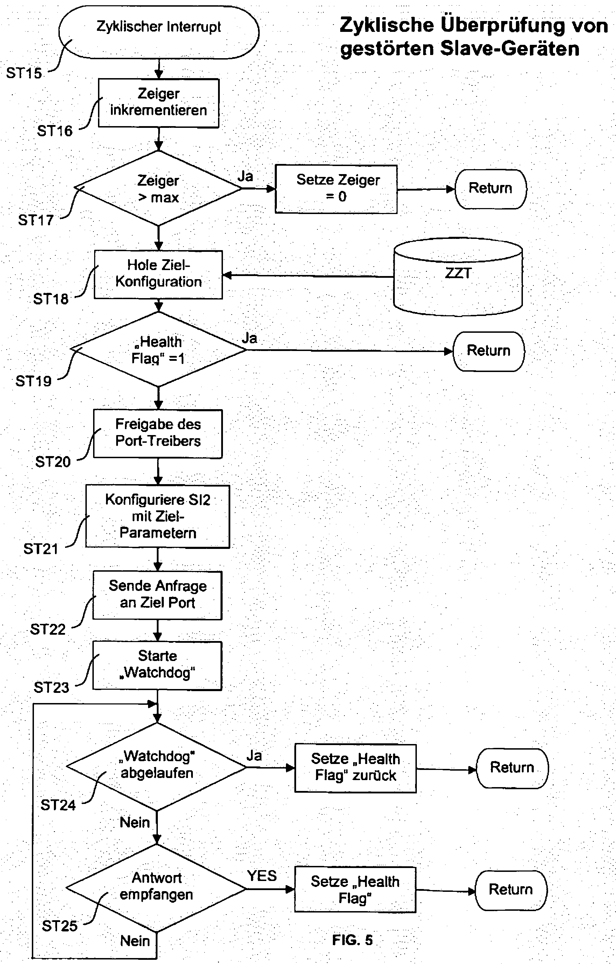

Ein schematischer Verfahrensablauf bei der zyklischen Überprüfung von gestörten Slave-Geräten ist in Fig. 5 als Ablaufdiagramm dargestellt. Nach einem zyklischen Interrupt in Step ST15 wird in Step St16 der Zeiger in die Ziel-Zuordnungstabelle ZZT inkrementiert.

Ist der Zeiger größer als die maximale Anzahl von Einträgen in der ZZT, wird er in Step ST17 auf Null gesetzt und die Interruptroutine verlassen. In Step ST18 erfolgt die Abholung der Ziel-Konfiguration aus der Ziel-Zuordnungstabelle ZZT auf die der Zeiger verweist. In Step ST19 wird der Status des "Health-Flag"-Eintrags überprüft und bei gesetztem Flag die Interruptroutine verlassen. Ist das Flag Null, erfolgt in Step ST20 die Freigabe des zweiten Transceivers des fehlerhaften Ausgangs-Ports und in Step ST21 die Konfiguration der zweiten seriellen Schnittstelle SI2 mit den Ziel-Parametern. Anschließend wird in Step ST22 eine Anfrage an den Ziel-Port gesendet und in Step ST23 der"Watchdog" gestartet. In Step ST24 wird der Ablauf des "Watchdog" überwacht und dann, wenn der "Watchdog" abgelaufen ist, das "Health-Flag" zurückgesetzt und die Interruptroutine verlassen.

Sollte der "Watchdog" in Step ST24 nicht abgelaufen sein, wird in Step ST25 überprüft, ob eine Antwort von dem Slave-Gerät erhalten wurde. Bejahendenfalls wird das "Health-Flag" gesetzt und die Interruptroutine verlassen. Anderenfalls wird zu Step ST24, d. h. der Prüfung des "Watchdog" zurückgekehrt.

## Patentansprüche

1. Kommunikationssystem (KS), umfassend einen Kommunikationsbus (KB), ein mit dem Kommunikationsbus verbundenes Master-Gerät (MD), welches mit dem Kommunikationsbus (KB) in einem Master-Modus kommuniziert und mehrere mit dem Kommunikationsbus (KB) verbindbare Slave-Gerät (SD1, SD2...SDn), die mit dem Kommunikationsbus (KB) in einem Slave-Modus kommunizieren, wobei die Slave-Geräte (SD1, SD2... SDn) über ein als Proxy ausgebildetes Kommunikationsmodul (KM) mit dem Kommunikationsbus (KB) verbindbar sind, wobei das Kommunikationsmodul (KM) über einen Eingangs-Port (EP1) mit dem Kommunikationsbus (KB) verbunden ist und Ausgangs-Ports (AP1, AP2...APn) zum Anschluss der Slave-Geräte (SD1, SD2...SDn) mittels Punkt-zu-Punkt-Verbindung aufweist,
wobei das Kommunikationsmodul (KM) einen Kommunikationsprozessor (KP) aufweist,
wobei der Kommunikationsprozessor (KP) eine Zuordnungstabelle (ZZT) mit Daten betreffend die Zuordnung von Ziel-Adressen zu Ausgangs-Ports (AP1, AP2...APn), und/oder Slave-Geräte-Adressen aufweist, so dass eingehende Nachrichten-Frames hinsichtlich ihrer Ziel-Adresse analysierbar und unter Berücksichtigung der Daten der Zuordnungstabelle (ZZT) an einen der Ausgangs-Ports (AP1, AP2...APn) weiterleitbar sind,
**dadurch gekennzeichnet,**
**dass** die Zuordnungstabelle weiterhin Kommunikationsparameter aufweist und die Weiterleitung unter Anwendung der zugeordneten Kommunikationsparameter für das an diesem Ausgangs-Port (AP1, AP2...APn) angeschlossene Slave-Gerät (SD1, SD2...SDn) erfolgt und dass der Kommunikationsprozessor eingangsseitig mit dem Kommunikationsbus (KB) und ausgangsseitig über eine erste serielle Schnittstelle (SI1) mit einem ersten internen Bus (IB1) verbunden ist, wobei jeder der Ausgangs-Ports (AP1, AP2...APn) über jeweils einen ersten schaltbaren Transceiver (TR1.1, TR1.2...TR1.n) mit dem ersten internen Bus (IB1) verbunden ist.

2. Kommunikationssystems nach Anspruch 1,
**dadurch gekennzeichnet,**
**dass** der Kommunikationsprozessor (KP) über eine zweite serielle Schnittstelle (SI2) mit einem zweiten internen Bus (IB2) verbunden ist, wobei die Ausgangs-Ports (AP1, AP2...APn) jeweils über einen zweiten schaltbaren Transceiver (TR2.1, TR2.2...TR2.n) mit dem zweiten internen Bus (IB2) verbunden sind, wobei Slave-Geräte (SD1, SD2...SDn) bzw. Ausgangs-Ports (AP1, AP2...APn), welche eine Rückantwort auf eine Anfrage des Kommunikationsprozessors (KP) über den ersten Bus nicht zurücksenden mittels des Kommunikationsprozessors (KP) über den zweiten Bus (IB2) parallel zu der regulären Kommunikation über den ersten internen Bus (IB1) zyklisch abfragbar sind.

3. Kommunikationssystem nach Anspruch 1 oder 2,
**dadurch gekennzeichnet,**
**dass** der Kommunikationsprozessor (KP) über eine dritte serielle Schnittstelle (SI3) und einen dritten Transceiver (TR3) mit dem Kommunikationsbus (KB) verbunden ist.

4. Kommunikationssystem nach zumindest einem der vorhergehenden Ansprüche,
**dadurch gekennzeichnet,**
**dass** der Kommunikationsbus (KB) ein RS-485-Format aufweist.

5. Kommunikationssystem nach zumindest einem der vorhergehenden Ansprüche,
**dadurch gekennzeichnet,**
**dass** die Punkt-zu-Punkt-Verbindung (L1, L2...Ln) zwischen Slave-Gerät (SD1, SD2...SDn) und Ausgangs-Port (AP1, AP2...APn) des Kommunikationsmoduls (KM) ein RS-485-Format aufweist.

6. Kommunikationssystem nach zumindest einem der vorhergehenden Ansprüche, **dadurch gekennzeichnet,**
**dass** die ersten Transceiver (TR1.1, TR1.2...TR1.n) über jeweils eine Leitung (L1.1, L1.2...L1.n) mit einem Ausgang (Out1..1, Out1.2...Out1.n) des Kommunikationsprozessors (KP) verbunden sind und dass die zweiten Transceiver (TR2.1, TR2.2...TR2.n) über eine Leitung (L2.1, L2.2...L2.n) mit einem Ausgang (Out2.0, Out2.2...Out2.n) des Kommunikationsprozessors (KP) verbunden sind.

7. Verfahren zur Steuerung und Überwachung einer Kommunikation zwischen einem Master-Gerät (MD) und Slave-Geräten (SD1, SD2...SDn) über einen Kommunikationsbus (KB), wobei Nachrichten-Frames von dem Master-Gerät (MD) über den Kommunikationsbus (KB) zu den Slave-Geräten (SD1, SD2...SDn) gesendet und ggf. Antworten der Slave-Geräte über den Kommunikationsbus (KB) zurück zu dem Master-Gerät (MD) gesendet werden,
**dadurch gekennzeichnet,**
**dass** die Slave-Geräte (SD1, SD2...SDn) über erste schaltbare Transceiver (TR1.1, TR1.2...TR1.n) und einen ersten internen Bus (IB1) mit einem Kommunikationsprozessor (KP) verbunden werden, welcher eingangsseitig mit dem Kommunikationsbus (KB) verbunden ist, wobei der Kommunikationsprozessor (KP) folgende Verfahrensschritte ausführt:
- Lesen einer Ziel-Adresse aus einem empfangenen Nachrichten-Frame,
- Holen der der Ziel-Adresse zugeordneten Ziel-Konfiguration aus einer Zuordnungstabelle (ZZT), wobei die Ziel-Konfiguration einen Ziel-Ausgangs-Port (AP1, AP2...APn), eine Adresse des Ziel-Slave-Gerätes und Kommunikations-Parameter des Ziel-Slave-Gerätes umfasst,
- Freigabe des Ziel-Ausgangs-Ports (AP1, AP2...APn) durch Schalten des dem Ziel-Ausgangs-Port zugeordneten ersten Transceivers (TR1.1, TR1.2...TR1.n),
- Übermitteln des Nachrichten-Frames zu dem Ziel-Ausgangs-Port (AP1, AP2...APn) unter Verwendung der zugeordneten KommunikationsParameter für das an diesem Ausgangs-Port angeschlossenen Slave-Gerät und
- Übermitteln einer Antwort des Slave-Gerätes (SD1, SD2...SDn) an das Master-Gerät (MD) bei ungestörter Kommunikation.

8. Verfahren nach Anspruch 7,
**dadurch gekennzeichnet,**
**dass** der Kommunikationsprozessor (KP) die laufende Kommunikation für jeden Ausgangs-Port (AP1, AP2...APn) durch Erfassen einer typischen Reaktionszeit des Slave-Gerätes überwacht, wobei die Reaktionszeit zur Berechnung eines optimalen Timeout-Wertes verwendet wird.

9. Verfahren nach Anspruch 7 oder 8,
**dadurch gekennzeichnet,**
**dass** die an dem Kommunikationsprozessor (KP) angeschlossenen Slave-Geräte (SD1, SD2...SDn) bei Störung zyklisch auf Funktion abgefragt werden, wobei dann, wenn innerhalb einer vorbestimmten Reaktionszeit ("Timeout") eine Rückantwort nicht empfangen wird, ein internes "Health-Flag" für den entsprechenden Ausgangs-Port (AP1, AP2...APn) in der Zuordnungstabelle (ZZT) zurückgesetzt wird und wobei der Kommunikationsprozessor (KP) auf jede Anfrage an das gestörte Slave-Geräte selbst an das Master-Gerät (MG) antwortet und dass der Kommunikationsprozessor (KP) über einen zweiten Bus (IB2) gleichzeitig kontinuierlich versucht, eine Antwort von dem gestörten Slave-Gerät (SD1, SD2...SDn) zu erhalten, indem der Kommunikationsprozessor selbst Nachrichten an das Slave-Gerät (SD1, SD2...SDn) sendet.

10. Verfahren nach einem der Ansprüche 7 bis 9,
**dadurch gekennzeichnet,**
**dass** bei Durchführung der regulären Kommunikation über den ersten internen Bus (IB1) eine Prüfung des "Health-Flag" erfolgt, wobei dann, wenn das "Health-Flag" den logischen Zustand "0" aufweist, der Kommunikationsprozessor (KP) eine "Exception-Nachricht" zu dem Master-Gerät (MD) sendet und dann, wenn das "Health-Flag" den logischen Zustand "1" aufweist, den Transceiver für die ungestörte Kommunikation des Ziel-Ausgangs-Ports (AP1, AP2...APn) freigibt.

11. Verfahren nach zumindest einem der Ansprüche 7 bis 10,
**dadurch gekennzeichnet,**
**dass** bei der zyklischen Überprüfung des Slave-Gerätes eine Überprüfung einer "Health-Flag"-Liste erfolgt, dass für den in der Liste ersten Flag-Eintrag eine zugehörige Ziel-Konfiguration aus der Zuordnungstabelle (ZZT) geholt wird, dass eine Freigabe des Transceivers für gestörte Kommunikation des Ausgangs-Ports mit fehlerhaftem bzw. gestörtem Slave-Gerät erfolgt, dass der Nachrichten-Frame zu dem Ziel-Ausgangs-Port gesendet wird, wobei bei Überschreiten einer Zeitdauer das "Health-Flag" zurückgesetzt und ein "List-Pointer" der "Health-Flag-Liste" erhöht wird.

12. Verfahren nach zumindest einem der Ansprüche 7 bis 11,
**dadurch gekennzeichnet,**
**dass** während eines Ablaufs eines "Watchdogs" überprüft wird, ob eine Antwort des Slave-Gerätes empfangen wird, dass bei Empfang einer Antwort ein "Health-Flag" gesetzt wird und dass dann, wenn eine Antwort nicht empfangen wird, der "Watchdog" bis zum Ablauf weiter überprüft wird und dass bei Überschreiten der "Watchdog"-Zeit das "Health-Flag" zurückgesetzt wird.

13. Kommunikationsmodul (KM), umfassend zumindest einen Eingangs-Port (EP1) zur Verbindung des Kommunikationsmoduls (KM) über einen KommunikationsBus (KB) mit einem Master-Gerät (MD) sowie eine Vielzahl an Ausgangs-Ports (AP1, AP2...APn), an die Slave-Geräte (SD1, SD2...SDn) anschließbar sind, wobei das Kommunikationsmodul (KM) als Proxy ausgebildet ist und einen Kommunikationsprozessor (KP) umfasst,
**dadurch gekennzeichnet,**
**dass** der Kommunikationsprozessor (KP) eingangsseitig mit dem Kommunikationsbus (KB) und ausgangsseitig über eine erste serielle Schnittstelle (SI1) mit einem ersten internen Bus (IB1) verbunden ist, wobei jeder der Ausgangs-Ports (AP1, AP2...APn) über jeweils einen ersten schaltbaren Transceiver (TR1.1, TR1.2...TR1.n) mit dem ersten internen Bus verbunden ist, dass der Kommunikationsprozessor (KP) über eine zweite serielle Schnittstelle (SI2) mit einem zweiten internen Bus (IB2) verbunden ist, wobei jeder der Ausgangs-Ports (AP1, AP2...APn) über jeweils einen zweiten schaltbaren Transceiver (TR2.1, TR2.2...TR2.n) mit dem zweiten internen Bus (IB2) verbunden ist, dass der Kommunikationsprozessor (KM) eine Zuordnungstabelle (ZZT) mit Daten betreffend die Zuordnung von Ziel-Adressen zu den Ausgangs-Ports (AP1, AP2...APn), Kommunikationsparametern und/oder Slave-Geräte-Adressen aufweist, so dass eingehende Nachrichten-Frames hinsichtlich ihrer Zieladresse analysierbar und unter Berücksichtigung der Daten der Zuordnungstabelle (ZZT) an einen Ausgangs-Port (AP1, AP2...APn) unter Anwendung der zugeordneten Kommunikationsparameter für das an diesem Ausgangs-Port (AP1, AP2...APn) angeschlossene Slave-Gerät (SD1, SD2...SDn) weiterleitbar sind.

14. Kommunikationsmodul (KM) nach Anspruch 13,
**dadurch gekennzeichnet,**
**dass** der Kommunikationsprozessor (KP) über eine dritte serielle Schnittstelle (SI3) und einen dritten Transceiver (TR3) mit dem Kommunikationsbus verbunden ist.

15. Kommunikationsmodul (KM) nach einem der Ansprüche 13 bis 14,
**dadurch gekennzeichnet,**
**dass** die ersten und zweiten Transceiver (TR1.1, TR1.2....TR1.n; TR2.1, TR2.2...TR2.n) über jeweils eine Verbindung (L1.1, L1.2...L1.n; L2.1, L2.2...L2.n) mit jeweils einem Ausgang (Out1.1, Out1.2...Out1.n; Out2.1, Out2.2...Out2.n) des Kommunikationsprozessors (KP) verbunden sind.

## Claims

1. Communication system (KS) comprising a communication bus (KB), a master device (MD) which is connected to the communication bus and which communicates with the communication bus (KB) in a master mode, and several slave devices (SD1, SD2 ... SDn) which can be connected to the communication bus (KB) and which communicate with the communication bus (KB) in a slave mode, wherein the slave devices (SD1, SD2 ... SDn) can be connected by means of a communication module (KM) designed as a proxy to the communication bus (KB), wherein the communication module (KM) is connected by means of an input port (EPI) to the communication bus (KB), and has output ports (AP1, AP2 ... APn) for the connection of the slave devices (SD1, SD2 ... SDn) by a point-to-point connection,
wherein the communication module (KM) has a communication processor (KP), wherein the communication processor (KP) has an association table (ZZT) with data pertaining to the association of destination addresses with output ports (AP1, AP2 ... APn), and/or slave device addresses, so that incoming message frames can be analyzed with regard to their destination address and forwarded, taking into consideration the data of the association table (ZZT), to one of the output ports (AP1, AP2 ... APn),
**characterized in that**
the association table (ZZT) further comprises communication parameters and the forwarding occurs by using the communication parameters associated to the slave device (SD1, SD2 ... SDn) connected to this output port (AP1, AP2 ... AP3) and that the communication processor (KP) is connected on the input side to the communication bus (KB) and on the output side to a first internal bus (IB1) by means of a first serial interface (SI1), wherein each of the output ports (AP1, AP2 ... APn) is connected to the first internal bus (IB1) in each case by means of a first switchable transceiver (TR1.1, TR1.2 ... TR1.n),

2. Communication system according to claim 1,
**characterized in that**
the communication processor (KP) is connected by means of a second serial interface (SI2) to a second internal bus (IB2), wherein the output ports (AP1, AP2 ... APn) are each connected by means of a second switchable transceiver (TR2.1, TR2.2 ... TR2.n) to the second internal bus (IB2), wherein slave devices (SD1, SD2 ... SDn) or output ports (AP1, AP2 ... APn) which do not send back a reply to a query of the communication processor (KP) by means of the first bus can be cyclically queried by the communication processor (KP) by means of the second bus (IB2) in parallel to the regular communication by means of the first internal bus (IB1).

3. Communication system according to claim 1 or 2,
**characterized in that**
the communication processor (KP) is connected by means of a third serial interface (SI3) and by means of a third transceiver (TR3) to the communication bus (KB).

4. Communication system according to at least one of the previous claims, **characterized in that**
the communication bus (KB) has an RS-485 format.

5. Communication system according to at least one of the previous claims, **characterized in that**
the point-to-point connection (L1, L2 ... Ln) between slave device (SD1, SD2 . .. SDn) and output port (AP1, AP2 ... APn) of the communication module (KM) has an RS-485 format.

6. Communication system according to at least one of the previous claims,
**characterized in that**
the first transceivers (TR1.1, TR1.2 ... TR1.n) are connected in each case by means of a line (L1.1, L1.2 ... L1.n) to an output (Out1 ... 1, Out1.2 ... Out1.n) of the communication processor (KP), and **in that** the second transceivers (TR2.1, TR2.2 ... TR2.n) are connected by means of a line (L2.1, L2.2 ... L2.n) to an output (Out2.0, Out2.2 ... Out2.n) of the communication processor (KP).

7. Method for controlling and monitoring a communication between a master device (MD) and slave devices (SD1, SD2 ... SDn) by means of a communication bus (KB), wherein message frames are sent by the master device (MD) by means of the communication bus (KB) to the slave devices (SD1, SD2 ... SDn), and if applicable responses of the slave devices are sent back to the master device (MD) by means of the communication bus (KB),
**characterized in that**
the slave devices (SD1, SD2 ... SDn) are connected by means of first switchable transceivers (TR1.1, TR1.2 ... TR1.n) and by means of a first internal bus (IB1) to a communication processor (KB), which is connected on the input side to the communication bus (KB), wherein the communication processor (KP) performs the following process steps: reading a destination address from a received message frame, fetching the destination configuration associated with the destination address from an association table (ZZT), wherein the destination configuration comprises a destination output port (AP1, AP2 ... APn), an address of the destination slave device and communication parameters of the destination slave device,
activating the destination output port (AP 1, AP2 ... APn) by switching the first transceiver (TR1.1, TR1.2 ... TR1.n) associated with the destination output port,
transmitting the message frame to the destination output port (AP1, AP2 ... APn) by using the communication parameters associated to the slave device connected to this output port, and
transmitting a response of the slave device (SD1, SD2 ... SDn) to the master device (MD) in the case of an undisturbed communication.

8. Method according to claim 7,
**characterized in that**
the communication processor (KP) monitors the ongoing communication for each output port (AP1, AP2 ... APn) by detecting a typical reaction time of the slave device, wherein the reaction time is used for the calculation of an optimal timeout value.

9. Method according to claim 7 or 8,
**characterized in that**
the slave devices (SD1, SD2 ... SDn) connected to the communication processor (KP), in the case of a disturbance, are queried cyclically regarding function, wherein then, if a reply has not been received within a predetermined reaction time ("timeout"), an internal "health flag" for the corresponding output port (AP1, AP2 ... APn) is reset in the association table (ZZT), and wherein the communication processor (KP) responds itself to each query, which was made to the undisturbed slave device, to the master device (MG), and **in that** the communication processor (KP) at the same time attempts continuously, by means of a second bus (IB2), to obtain a response from the disturbed slave device (SD1, SD2 ... SDn), **in that** the communication processor itself sends messages to the slave device (SD1, SD2 ... SDn).

10. Method according to one of the claims 7 to 9,
**characterized in that**,
in the case of the performance of the regular communication by means of the first internal bus (IB1), a verification of the "health flag" occurs, wherein then, if the "health flag" has the logic state "0," the communication processor (KP) sends an "exception message" to the master device (MD), and then, if the "health flag" has the logic state "1," it enables the transceiver for the undisturbed communication of the destination output port (AP1, AP2 ... APn).

11. Method according to at least one of the claims 7 to 10,
**characterized in that**,
in the case of the cyclic verification of the slave device, a verification of a "health flag" list occurs, **in that**, for the flag entry that is first in the list, an associated destination configuration is obtained from the association table (ZZT), **in that** an enabling of the transceiver occurs for an undisturbed communication of the output port with defective or disturbed slave device, **in that** the message frame is sent to the destination output port, wherein, if a time period is exceeded, the "health flag" is set back, and a "list pointer" of the "health flag list" is increased.

12. Method according to at least one of the claims 7 to 11,
**characterized in that**,
during a course of a "watchdog," a verification is carried out to determine whether a response of the slave device has been received, **in that**, in the case of the reception of a response, a "health flag" is set, and **in that** then, if no response has been received, then "watchdog" continues to be verified until the expiration, and **in that**, if the "watchdog" duration has been exceeded, the "health flag" is set back.

13. Communication module (KM), comprising at least one input port (EP1) for connecting the communication module (KM) by means of a communication bus (KB) to a master device (MD) as well as a plurality of output ports (AP1, AP2 .. . APn) to which the slave devices (SD1, SD2 ... SDn) can be connected, wherein the communication module (KM) is designed as a proxy, comprising a communication processor (KP),
**characterized in that**
the communication processor (KP) is connected on the input side to the communication bus (KB) and on the output side to a first internal bus (IB1) by means of a first serial interface (SI1), wherein each of the output ports (AP1, AP2 ... APn) is connected in each case to the first internal bus by means of a first switchable transceiver (TR1.1, TR1.2 ... TR1.n), **in that** the communication processor (KP) is connected to a second internal bus (IB2) by means of a second serial interface (SI2), wherein each of the output ports (AP1, AP2 ... APn) is connected to the second internal bus (IB2) in each case by means of a second switchable transceiver (TR2.1, TR2.2 ... TR2.n), **in that** the communication processor (KM) has an association table (ZZT) with data pertaining to the association of destination addresses with the output ports (AP1, AP2 ... APn), communication parameters and/or slave device addresses, so that incoming message frames can be analyzed with regard to their destination address, and they can be forwarded, taking into consideration the data of the association table (ZZT), to an output port (AP1, AP2 ... APn) using the associated communication parameters for the slave device (SD1, SD2...SDn) connected to the output port (AP1, AP2 ... APn).

14. Communication module (KM) according to claim 13,
**characterized in that**
the communication processor (KP) is connected by means of a third serial interface (SI3) and by means of a third transceiver (TR3) to the communication bus.

15. Communication module (KM) according to claim 13 to 14,
**characterized in that**
the first and second transceivers (TR1.1, TR1.2 ... TR1.n; TR2.1, TR2.2 ... TR2.n) are connected in each case by means of a connection (L1.1, L1.2 ... L1.n; L2.1, L2.2 ... L2.n) in each case to an output (Out1.1, Out1.2...Out1.n; Out2.1, Out2.2 ... Out2.n) of the communication processor (KP).

## Revendications

1. Système de communication (KS) comprenant un bus de communication (KB), un appareil maître (MD) qui est relié au bus de communication (KB) et communique avec celui-ci dans un mode maître, et plusieurs appareils esclaves (SD1, SD2...SDn) qui peuvent être reliés au bus de communication (KB) et qui communiquent avec celui-ci (KB) dans un mode esclave, sachant que les appareils esclaves (SD1, SD2...SDn) peuvent être reliés au bus de communication (KB) par l'intermédiaire d'un module de communication (KM) conçu en tant que proxy, sachant que le module de communication (KM) est relié au bus de communication (KB) par l'intermédiaire d'un port d'entrée (EP1) et présente des ports de sortie (AP1, AP2...APn) pour raccorder les appareils esclaves (SD1, SD2...SDn) au moyen d'une liaison point à point,
sachant que le module de communication (KM) est doté d'un processeur de communication (KP),
sachant que ce dernier (KP) présente une table d'allocation (ZZT) comprenant des données concernant l'allocation d'adresses cibles aux ports de sortie (AP1, AP2...APn) et/ou des adresses d'appareils esclaves afin que des trames de messages entrant puissent être analysées en ce qui concerne leur adresse cible et puissent être retransmises à un des ports de sortie (AP1, AP2...APn) en tenant compte des données de la table d'allocation (ZZT),
**caractérisé en ce**
**que** la table d'allocation contient également des paramètres de communication, en ce que la transmission a lieu en utilisant les paramètres de communication associés pour l'appareil esclave (SD1, SD2...SDn) raccordé à ce port de sortie (AP1, AP2...APn), et en ce que le processeur de communication est relié côté entrée au bus de communication (KB) et côté sortie à un premier bus interne (IB1) par l'intermédiaire d'une première interface sérielle (SI1), sachant que chacun des ports de sortie (AP1, AP2...APn) est respectivement relié au premier bus interne (IB1) par l'intermédiaire d'un premier émetteur-récepteur commutable (TR1.1, TR1.2...TR1n).

2. Système de communication selon la revendication 1,
**caractérisé en ce**
**que** le processeur de communication (KP) est relié à un deuxième bus interne (IB2) par l'intermédiaire d'une deuxième interface sérielle (SI2), sachant que les ports de sortie (AP1, AP2...APn) sont respectivement reliés au deuxième bus interne (IB2) par l'intermédiaire d'un deuxième émetteur-récepteur commutable (TR2.1, TR2.2...TR2.n), sachant que les appareils esclaves (SD1, SD2...SDn) ou les ports de sortie (AP1, AP2...APn), qui ne renvoient pas une réponse suite à une demande du processeur de communication (KP) par l'intermédiaire du premier bus, peuvent être interrogés cycliquement au moyen du processeur de communication (KP) par l'intermédiaire du deuxième bus (IB2) parallèlement à la communication normale via le premier bus interne (IB1).

3. Système de communication selon la revendication 1 ou 2,
**caractérisé en ce**
**que** le processeur de communication (KP) est relié au bus de communication (KB) par l'intermédiaire d'une troisième interface sérielle (SI3) et d'un troisième émetteur-récepteur (TR3).

4. Système de communication selon au moins une des revendications précédentes,
**caractérisé en ce**
**que** le bus de communication (KB) présente un format RS-485.

5. Système de communication selon au moins une des revendications précédentes,
**caractérisé en ce**
**que** la liaison point à point (L1 L2...Ln) entre l'appareil esclave (SD1, SD2...SDn) et le port de sortie (AP1, AP2...APn) du module de communication (KM) présente un format RS-485.

6. Système de communication selon au moins une des revendications précédentes,
**caractérisé en ce**
**que** les premiers émetteurs-récepteurs (TR1.1, TR1.2...TR1n) sont reliés respectivement à une sortie (Out1.1, Out1.2...Out1.n) du processeur de communication (KP) par l'intermédiaire d'une ligne (L1.1, L1.2...L1.n) et que les deuxièmes émetteurs-récepteurs (TR2.1, TR2.2...TR2.n) sont reliés à une sortie (Out2.0, Out2.2...Out2.n) du processeur de communication (KP) par l'intermédiaire d'une ligne (L2.1, L2.2...L2.n).

7. Procédé de commande et de surveillance d'une communication entre un appareil maître (MD) et des appareils esclaves (SD1, SD2...SDn) au moyen d'un bus de communication (KB), sachant que des trames de messages provenant de l'appareil maître (MD) sont envoyés aux appareils esclaves (SD1, SD2...SDn) par l'intermédiaire du bus de communication (KB) et que, le cas échéant, les réponses des appareils esclaves sont renvoyées à l'appareil maître (MD) par l'intermédiaire du bus de communication (KB),
**caractérisé en ce**
**que** les appareils esclaves (SD1, SD2...SDn) sont reliés à un processeur de communication (KP) par l'intermédiaire des premiers émetteurs-récepteurs commutables (TR1.1, TR1.2...TR1.n) et d'un premier bus interne (IB1), lequel processeur (KP) est relié au bus de communication (KB) côté entrée et exécute les opérations suivantes du procédé :
- lecture d'une adresse cible à partir d'une trame de messages reçue ;
- récupération de la configuration cible associée à l'adresse cible dans une table d'allocation (ZZT), sachant que la configuration cible comprend un port de sortie cible (AP1, AP2...APn), une adresse de l'appareil esclave cible et des paramètres de communication de l'appareil esclave cible ;
- autorisation du port de sortie cible (AP1, AP2...APn) en activant le premier émetteur-récepteur (TR1.1, TR1.2...TR1.n) associé au port de sortie cible ;
- transmission de la trame de messages au port de sortie cible (AP1, AP2...APn) en utilisant les paramètres de communication associés pour l'appareil esclave raccordé à ce port de sortie et
- transmission d'une réponse de l'appareil esclave (SD1, SD2...SDn) à l'appareil maître (MD) en cas de communication non perturbée.

8. Procédé selon la revendication 7,
**caractérisé en ce**
**que** le processeur de communication (KP) surveille la communication en cours pour chaque port de sortie (AP1, AP2...APn) en enregistrant une durée de réaction type de l'appareil esclave, ce temps de réaction étant utilisé pour calculer une valeur de temporisation optimale.

9. Procédé selon la revendication 7 ou 8,
**caractérisé en ce**
**que** le fonctionnement des appareils esclaves (SD1, SD2...SDn) raccordés au processeur de communication (KP) est interrogé cycliquement en cas de panne, sachant que si une réponse n'est pas reçue au bout d'une durée de réaction prédéfinie (« temporisation »), un drapeau « Health-Flag » interne pour le port de sortie correspondant (AP1, AP2...APn) est réinitialisé dans la table d'allocation (ZZT) et sachant que le processeur de communication (KP) répond à l'appareil maître (MG) pour toute interrogation de l'appareil esclave en panne et que le processeur de communication (KP) essaie simultanément en permanence de recevoir une réponse de l'appareil esclave en panne (SD1, SD2...SDn) par l'intermédiaire d'un deuxième bus (IB2) en envoyant lui-même des messages à l'appareil esclave (SD1, SD2...SDn).

10. Procédé selon l'une des revendications 7 à 9,
**caractérisé en ce**
**qu'**un contrôle du « Health-Flag » a lieu lors de la réalisation de la communication normale par l'intermédiaire du premier bus interne (IB1), sachant que le processeur de communication (KP) envoie un « message d'exception » à l'appareil maître (MD) si le « Health-Flag » présente l'état logique « 0 » et autorise l'émetteur-récepteur pour la communication non perturbée du port de sortie cible (AP1, AP2...APn) si le « Health-Flag » présente l'état logique « 1 ».

11. Procédé selon au moins une des revendications 7 à 10,
**caractérisé en ce**
**qu'**un contrôle d'une liste de « Health-Flag » a lieu lors du contrôle cyclique de l'appareil esclave, en ce qu'une configuration cible correspondante est récupérée dans la table d'allocation (ZZT) pour le premier élément Flag de la liste, en ce qu'une autorisation de l'émetteur-récepteur a lieu pour une communication perturbée du port de sortie avec appareil esclave défectueux ou en panne, en ce que la trame de messages est envoyée au port de sortie cible, sachant que le « Health-Flag » est réinitialisé en cas de dépassement d'une certaine durée et qu'un « List-Pointer » de la liste des « Health-Flag » est augmenté.

12. Procédé selon au moins une des revendications 7 à 11,
**caractérisé en ce**
**que** le système contrôle, pendant le fonctionnement d'une horloge de surveillance appelée « Watchdog », si une réponse de l'appareil esclave est reçue, et en ce qu'un « Health-Flag » est activé lors de la réception d'une réponse, en ce que, si aucune réponse n'est reçue, le « Watchdog » continue à surveiller jusqu'à son expiration, et en ce que le « Health-Flag » est réinitialisé en cas de dépassement de la durée du « Watchdog ».

13. Module de communication (KM) comprenant au moins un port d'entrée (EP1) pour relier le module de communication (KM) à un appareil maître (MD) par l'intermédiaire d'un bus de communication (KB) et comprenant une pluralité de ports de sortie (AP1, AP2...APn) auxquels peuvent être raccordés des appareils esclaves (SD1, SD2...SDn), sachant que le module de communication (KD) est conçu sous forme de proxy et comprend un processeur de communication (KP),
**caractérisé en ce**
**que** le processeur de communication (KP) est relié côté entrée au bus de communication (KB) et côté sortie à un premier bus interne (IB1) par l'intermédiaire d'une première interface sérielle (SI1), sachant que chacun des ports de sortie (AP1, AP2...APn) est respectivement relié au premier bus interne par l'intermédiaire d'un premier émetteur-récepteur commutable (TR1.1, TR1.2...TR1.n), en ce que le processeur de communication (KP) est relié au deuxième bus interne (IB2) par l'intermédiaire d'une deuxième interface sérielle (SI2), sachant que chacun des ports de sortie (AP1, AP2...APn) est relié au deuxième bus interne (IB2) par l'intermédiaire d'un deuxième émetteur-récepteur commutable (TR2.1, TR2.2...TR2.n), en ce que le processeur de communication (KM) présente une table d'allocation (ZZT) comprenant des données
concernant l'allocation d'adresses cibles aux ports de sortie (AP1, AP2...APn), des paramètres de communication et/ou des adresses d'appareils esclaves afin que des trames de messages entrant puissent être analysées en ce qui concerne leur adresse cible et puissent être retransmises à un port de sortie (AP1, AP2...APn) en tenant compte des données de la table d'allocation (ZZT) et en utilisant les paramètres de communication associés pour l'appareil esclave (SD1, SD2...SDn) raccordé à ce port de sortie (AP1, AP2...APn).

14. Système de communication (KM) selon la revendication 13,
**caractérisé en ce**
**que** le processeur de communication (KP) est relié au bus de communication par l'intermédiaire d'une troisième interface sérielle (SI3) et d'un troisième émetteur-récepteur (TR3).

15. Module de communication (KM) selon l'une des revendications 13 à 14,
**caractérisé en ce**
**que** les premiers et deuxièmes émetteurs-récepteurs (TR1.1, TR1.2...TR1.n ; TR2.1, TR2.2...TR2.n) sont reliés respectivement à une sortie (Out1.1, Out1.2...Out1.n ; Out2.1, Out2.2...Out2.n du processeur de communication (KP) par l'intermédiaire d'une liaison (L1.1, L1.2...L1.n ; L2.1, L2.2...L2.n).
